# DEMANDE DE BREVET EUROPEEN

(11) **EP 4 535 442 A1**
(43) Date de publication de la demande: **09.04.2025**
(21) Numéro de dépôt: 24203905.5
(22) Date de dépôt: 01.10.2024
(51) Int. Cl.: H01M 4/04, H01M 4/136, H01M 4/1397, H01M 4/52, H01M 4/58, H01M 10/0565

(54) **COMPOSÉS FLUORÉS, LEURS PROCÉDÉS DE PRÉPARATION, ET LEURS UTILISATIONS, NOTAMMENT POUR LA PRÉPARATION D'ANODES DE BATTERIE AU FLUOR**

(30) Priorité: 03.10.2023 FR 2310562
(71) Demandeur: Commissariat à l'Energie Atomique et aux Energies Alternatives, 75015 Paris (FR); Centre National de la Recherche Scientifique, 75016 Paris (FR)
(72) Inventeur: VAN ROEKEGHEM, Ambroise, 38054 Grenoble Cedex (FR); CANO, Andrès, 38054 Grenoble Cedex (FR)
(74) Mandataire: Gevers & Orès

(57) **Abrégé**

La présente invention concerne de nouveaux composés fluorés, et leurs procédés de préparation. L'invention vise également l'utilisation desdits composés pour la préparation de matériaux actifs pour les batteries au fluor, en particulier pour des anodes de batterie au fluor, pour la préparation de batteries au fluor elles-mêmes, ainsi que lesdits matériaux actifs et lesdites batteries *per se.*

## Description

La présente invention concerne de nouveaux composés fluorés, et leurs procédés de préparation. L'invention vise également l'utilisation desdits composés pour la préparation de matériaux actifs pour les batteries au fluor, en particulier pour des anodes de batterie au fluor, pour la préparation de batteries au fluor elles-mêmes, ainsi que lesdits matériaux actifs et lesdites batteries *per se*.

Les batteries au fluor ont été proposées comme une alternative prometteuse aux batteries lithium-ion actuellement utilisées dans de nombreux appareils électroniques, véhicules électriques et systèmes de stockage d'énergie.

En effet, la technologie de batterie au fluor est basée sur l'utilisation d'électrolytes fluorés qui ont une conductivité ionique élevée, permettant ainsi une densité d'énergie plus élevée que les batteries au lithium-ion. Et l'un des intérêts des batteries au fluor est la possibilité d'utilisation d'électrolytes solides, rendus possibles par cette mobilité élevée du fluor.

En outre, les batteries au fluor sont plus stables que les batteries lithium-ion, ce qui réduit le risque d'incendies et d'explosions. En effet, les électrolytes fluorés ont une plus grande stabilité chimique et thermique, ce qui leur permet de fonctionner à des températures plus élevées sans risque de décomposition.

Dans ce contexte, des batteries comprenant une cathode ou une anode contenant un matériau actif de type conversion ont été proposées. Cependant, dans une réaction de conversion typique, le matériau d'électrode subit une réaction d'oxydoréduction pendant la fluoration/défluoration, qui s'accompagne d'une modification de la structure cristalline entraînant la rupture et la recombinaison des liaisons chimiques et souvent une modification importante du volume du matériau d'électrode actif. Ce changement de volume important entraîne une perte de contact physique entre le matériau actif de l'électrode, les particules conductrices et l'électrolyte, ce qui peut entraîner une détérioration significative des performances électrochimiques de l'électrode.

Un objectif de l'invention est ainsi de fournir un composé fluoré permettant l'obtention d'un matériau actif d'intercalation pour une électrode négative de batterie au fluor.

Un avantage des composés de l'invention réside dans le fait que les ions fluor peuvent y être insérés ou retirés du réseau hôte de manière réversible, avec des changements de volume très faibles au cours de la réaction d'oxydoréduction.

Ainsi, les composés de l'invention permettent des performances améliorées lors du cyclage, avec notamment une dégradation plus limitée de l'anode et donc de la batterie. En plus, ces composés permettent d'atteindre des densités volumétriques et gravimétriques d'énergie plus élevées qu'avec d'autres matériaux d'insertion envisageables.

Aussi, l'invention concerne un composé de formule (I) suivante :

AₓNiF₂ (I),

dans laquelle :
A est au moins un métal choisi parmi Na, K, Li, Rb, Cs, Mg, Ca, Sr, ou Ba ;
et x est tel que 0 < x ≤ 1.

Selon un mode de réalisation particulier, le composé de l'invention est de formule (Ia) suivante :

Dₓ₁Eₓ₂NiF₂ (Ia),

dans laquelle :
D est au moins un métal choisi parmi Na, K, Li, Rb, Cs, Mg, Ca, Sr, ou Ba ;
E est un autre métal choisi parmi au moins Na, K, Li, Rb, Cs, Mg, Ca, Sr, ou Ba ;
x1 est tel que 0 ≤ x1 ≤ 1 ;
x2 est tel que 0 ≤ x2 ≤ 1 ;
avec 0 < x1 + x2 ≤ 1.

Ainsi, E est différent de D.

Selon un mode de réalisation particulier, x1 et x2 sont non nuls.

Selon un mode de réalisation particulier, x1 est tel que 0 ≤ x1 ≤ 0,5, plus particulièrement x1 étant par exemple de 0,5; et/ou x2 est tel que 0,5 ≤ x2 < 1, plus particulièrement x2 étant par exemple de 0,5.

Selon un mode de réalisation particulier, le composé de l'invention est de formule (Ib) suivante :

Naₓ₁Kₓ₂Liₓ₃Mgₓ₄Caₓ₅NiF₂ (Ib),

dans laquelle :
x1 est tel que 0 ≤ x1 ≤ 1 ;
x2 est tel que 0 ≤ x2 ≤ 1 ;
x3 est tel que 0 ≤ x3 ≤ 1 ;
x4 est tel que 0 ≤ x4 ≤ 1 ;
x5 est tel que 0 ≤ x5 ≤ 1 ;
avec 0 < x1 + x2 + x3 + x4 + x5 ≤ 1.

Selon un mode de réalisation particulier :
- Au moins deux de x1-x5 sont non nuls ; ou
- Au moins trois de x1-x5 sont non nuls ; ou
- Au moins quatre de x1-x5 sont non nuls ; ou
- x1-x5 sont non nuls.

Selon un mode de réalisation particulier, le composé de l'invention est de formule (Ic) suivante :

Naₓ₁Kₓ₂NiF₂ (Ic),

dans laquelle :
x1 est tel que 0 ≤ x1 ≤ 1 ;
x2 est tel que 0 ≤ x2 ≤ 1 ;
avec 0 < x1 + x2 ≤ 1.

Selon un mode de réalisation particulier, le composé de l'invention a une structure de type couche infinie, et notamment une forme crystalline de type P4/mmm, I4/mcm, C2/c, ou Pbnm.

La forme crystalline peut par exemple être déterminée par diffraction de rayons X, notamment selon l'un des protocoles bien connus de l'homme du métier.

Selon un autre aspect, l'invention concerne également un procédé de préparation d'un composé tel que défini plus haut, comprenant une étape de défluoration d'un composé de formule (II) suivante :

AₓNiF₃ (II),

dans laquelle A et x sont tels que définis plus haut.

Tous les modes de réalisation mentionnés à propos du composé de l'invention s'appliquent également ici, seuls ou combinaisons.

Selon un mode de réalisation particulier, le composé de formule (II) tel que défini précédemment, est de l'une des formules suivantes :

Dₓ₁Eₓ₂NiF₃ (IIa)

,

Naₓ₁Kₓ₂Liₓ₃Mgₓ₄Caₓ₅NiF₃ (IIb),

ou

Naₓ₁Kₓ₂NiF₃ (IIc)

, dans lesquelles D, E, x1, x2, x3, x4, et x5 sont tels que définis précédemment.

Selon un mode de réalisation particulier, l'étape de défluoration se fait sous hydrogène, en particulier sous flux d'hydrogène.

Selon un autre mode de réalisation particulier, l'étape de défluoration se fait en présence d'un agent réducteur tels que NaH et/ou CaH₂.

Selon un autre mode de réalisation particulier, l'étape de défluoration se fait par voie électrochimique.

Selon un autre aspect, l'invention concerne également un procédé de préparation d'un composé tel que défini plus haut, comprenant une étape de croissance de couche mince par épitaxie.

Tous les modes de réalisation mentionnés à propos du composé de l'invention s'appliquent également ici, seuls ou combinaisons.

Selon un mode de réalisation particulier, l'étape de croissance de couche mince se fait sur un substrat de type SrTiO₃, KTaO₃, ou EuScO₃.

Selon un autre aspect, l'invention concerne également l'utilisation d'un composé tel que défini plus haut pour la préparation d'un matériau actif, notamment d'intercalation, pour électrode négative.

Tous les modes de réalisation mentionnés à propos du composé de l'invention s'appliquent également ici, seuls ou combinaisons.

Selon un autre aspect, l'invention concerne également un matériau actif, notamment d'intercalation, pour électrode négative, en particulier de batterie au fluor, constitué de ou comprenant un composé tel que défini plus haut.

Tous les modes de réalisation mentionnés à propos du composé de l'invention s'appliquent également ici, seuls ou combinaisons.

Selon un mode de réalisation particulier, la présente invention concerne un matériau actif tel que défini plus haut, dont le composé tel que défini plus haut forme un couple redox avec un composé de formule (II) suivante :

AₓNiF_{2+y} (II),

dans laquelle A et x sont tels que définis plus haut et 0 < y ≤ 1.

Selon un mode de réalisation particulier, le composé de formule (II) tel que défini précédemment, est de l'une des formules suivantes :

Dₓ₁Eₓ₂NiF_{2+y} (IIa),

Naₓ₁Kₓ₂Liₓ₃Mgₓ₄Caₓ₅NiF_{2+y} (IIb),

ou

Naₓ₁Kₓ₂NiF_{2+y} (IIc),

dans lesquelles D, E, x1, x2, et y sont tels que définis précédemment.

Selon un mode de réalisation particulier, le composé de formule (I) a une structure de type couche infinie, et notamment une forme crystalline de type P4/mmm, I4/mcm, C2/c, ou Pbnm.

Selon un autre aspect, l'invention concerne également l'utilisation d'un composé tel que défini plus haut, ou d'un matériau actif tel que défini plus haut, pour la préparation d'une batterie, notamment d'intercalation, au fluor.

Tous les modes de réalisation mentionnés à propos du composé de l'invention s'appliquent également ici, seuls ou combinaisons.

Selon un autre aspect, l'invention concerne également une batterie, notamment d'intercalation, au fluor, comprenant :
- une électrode négative comprenant ou constituée d'un matériau actif tel que défini plus haut ;
- une électrode positive ;
- un électrolyte, ayant notamment une conductivité en ions fluorure.

Tous les modes de réalisation mentionnés à propos du composé de l'invention s'appliquent également ici, seuls ou combinaisons.

Outre le matériau actif, l'électrode peut contenir de l'électrolyte et un additif carboné, comme illustré dans l'exemple 2.

Selon un mode de réalisation particulier, la batterie de l'invention comprend :
- une couche d'électrode négative comprenant ou constituée d'un matériau actif tel que défini plus haut ;
- une couche d'électrode positive ; et
- entre ladite couche d'électrode négative et ladite couche d'électrode négative, à leur contact, une couche d'électrolyte, en particulier solide.

Selon un mode de réalisation particulier, l'électrolyte est de formule suivante : La_{0,9}Ba_{0,1}F_{2,9}.

Selon un mode de réalisation particulier, l'électrode positive est constituée de ou comprend un matériau de formule suivante :
La₂NiO_{(4+δ)}Fₓ, avec δ variant de -1,5 à 0,25, δ étant par exemple de 1,3 ; et x variant de 1 à 3.

Outre ce matériau, l'électrode peut contenir de l'électrolyte et un additif carboné, comme illustré dans l'exemple 2.

Des exemples de cathode et/ou d'électrolyte pouvant également convenir dans le cadre de la présente invention sont notamment décrits par Nowroozi et al., J. Mater. Chem. A, 2021, 9, 5980 (2020).

### DEFINITIONS

Tel qu'on l'entend ici, et sauf indications contraires, les plages de valeur sous forme de « x-y » ou « de x à y » ou « entre x et y » incluent les bornes x et y, tous les nombres à une décimale compris entre ces bornes, ainsi que, le cas échéant, les entiers compris entre ces bornes.

A titre d'exemple, « 0-1 », ou « de 0 à 1 » ou « entre 0 et 1 » désignent notamment, et sauf indications contraires, les entiers 0 et 1, ainsi que les nombres décimaux 0,1 ; 0,2 ; 0,3 ; 0,4 ; 0,5 ; 0,6 ; 0,7 ; 0,8 et 0,9.

Tel qu'on l'utilise dans la présente description, le terme « environ » se réfère à un intervalle de valeurs de ± 10 % d'une valeur spécifique. A titre d'exemple, l'expression « environ 20 » comprend les valeurs de 20 ± 10 %, soit les valeurs de 18 à 22.

Au sens de la présente description, les pourcentages se réfèrent à des pourcentages en masse par rapport à la masse totale de la formulation, sauf indication contraire.

Par couche, on entend notamment une strate d'éléments superposés.

### FIGURES

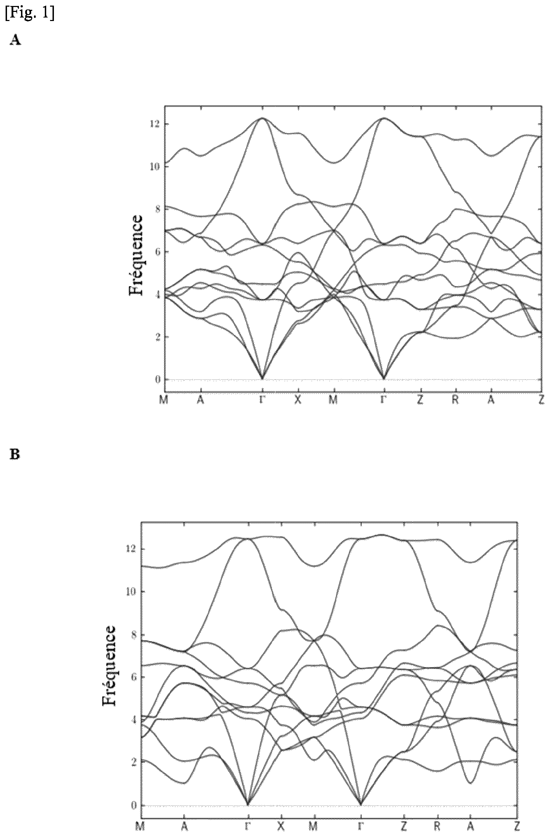

La figure 1 présente les spectres de phonons de KNiF2 (A) et NaNiF2 (B) en structure P4/mmm à 300K, selon l'exemple 1.

### EXEMPLES

### Exemple 1 : Préparation de composés de l'invention

Les composés AₓNiF₂ de l'invention peuvent être obtenus à partir de précurseurs AₓNiF₃ par réduction topochimique.

Par exemple, NaNiF₃ peut être obtenu à partir d'un mélange équimolaire de matériaux bruts NaF et NiF₂.

Le NaF (Wako Pure Chemical Industries, 99,0 %) et le NiF₂ (Alfa Aesar, 99 %) ont été mélangés dans un rapport molaire de 1:1 dans un mortier en agate, et le mélange a été façonné en un pastille. Cette manipulation d'échantillon a été réalisée dans une boîte à gants remplie d'argon. La pastille a été chauffée à 500 °C pendant 12 heures sous un flux de gaz argon (voir notamment Journal of Solid State Chemistry 2012, 191, 167-174).

AₓNiF₃ peut généralement également être obtenu par des procédés hydrothermaux ou solvothermaux doux, où les réactions sont réalisées à 140-250 °C. Les précurseurs sont à nouveau les matériaux bruts AₓF et NiF₂, et le solvant peut être de l'éthylène glycol (Chemistry Letters 2002, 31(5), 538-539).

La réduction ultérieure peut être réalisée par topo-chimie en utilisant des agents réducteurs tels que CaH₂ ou NaH selon les réactions suivantes :

AₓNiF₃ + NaH -> AₓNiF₂ + NaF + 0,5 H₂

AₓNiF₃ + 0,5 CaH₂ -> AₓNiF₂ + 0,5 CaF₂ + 0,5 H₂

La température de réaction peut notamment être inférieure à 300 °C. En pratique, pour réduire le précurseur et obtenir AₓNiF₂, le précurseur peut être mélangé avec l'agent réducteur à l'aide d'un mortier et d'un pilon dans une boîte à gants remplie d'argon. Le mélange est ensuite placé dans un creuset en corindon, scellé dans des réacteurs étanches au vide en acier inoxydable, et chauffé pendant plusieurs heures. Après la réaction, le réacteur est ouvert à l'intérieur d'une boîte à gants remplie d'argon pour retirer les échantillons.

Les composés suivants : NaNiF₂ et KNiF₂ peuvent ainsi être obtenus.

Ces derniers sont de structure P4/mmm, tel que mis en évidence par diffraction par rayons X.

Les spectres de phonons à température ambiante de ces composés sont illustrés à la figure 1. Ceci montre que ces structures sont stables dynamiquement, notamment à 300K.

Les potentiels moyens des couples correspondants, tels que calculés par la théorie de la fonctionnelle de la densité, sont les suivants :

NaNiF₂ + ½ ZnF₂ -> ½ Zn + NaNiF₃ : ΔE = 0,14 eV.

KNiF₂ + ½ ZnF₂ -> ½ Zn + KNiF₃ : ΔE = -0,23 eV.

Ceci indique que ces composés peuvent être utilisés comme électrode négative pour les batteries au fluor.

La capacité théorique relative au couple NaNiF₂/NaNiF₃ est d'environ 193 mAh/g, et pour KNiF₂/KNiF₃ de 173 mAh/g.

### Exemple 2 : Préparation d'une batterie au fluor

Une batterie d'intercalation au fluor de type La₂NiO₃F₂ / La_{0.9}Ba_{0.1}F_{2.9} / NaNiF₂ peut être préparée comme suit.

La_{0.9}Ba_{0.1}F_{2.9} est préparé à partir de BaF₂ et LaF₃ par mécanosynthèse sous argon, puis pressé, comme par exemple décrit par Mohammad Ali Nowroozi à la page 31 de son manuscrit de thèse (On the Development of Intercalation-Based Cathode Materials for All-Solid-State Fluoride Ion Batteries, Darmstadt 2020).

La₂NiO₃F₂ est par exemple préparé comme décrit au paragraphe 2.1 de Wissel et al. (Inorg. Chem. 2018, 57(11), 6549-6560) : d'abord La₂NiO_{(4+d)} est synthétisé par frittage de La₂O₃ et NiO, puis mélangé avec du PVDF et chauffé à 370 degrés Celsius sous air pendant 24 heures.

Il a été montré que le composé peut être employé comme électrode positive de batterie au fluor dans Wissel et al. (Chem. Mater. 2021, 33(2), 499-512).

NaNiF₂ est préparé comme décrit plus haut.

On forme d'abord l'électrode positive et l'électrode négative en mélangeant chacun des matériaux actifs avec de l'électrolyte et un additif carboné (en proportion 50 :40 :10) puis en les pressant. Les électrodes et l'électrolyte sont assemblés par superposition puis pression dans une atmosphère d'argon, puis transférés dans une cellule type Swagelok avec des collecteurs de courant en acier inoxydable. Le processus est décrit par Mohammad Ali Nowroozi par exemple au paragraphe 4.3 de son manuscrit de thèse (ibid.).

## Revendications

1. Composé de formule (I) suivante :
AₓNiF₂ (I),
dans laquelle :
A est au moins un métal choisi parmi Na, K, Li, Rb, Cs, Mg, Ca, Sr, Ba ; et
x est tel que 0 < x ≤ 1.

2. Composé selon la revendication 1, de formule (Ia) suivante :
Dₓ₁Eₓ₂NiF₂ (Ia),
dans laquelle :
D est au moins un métal choisi parmi Na, K, Li, Rb, Cs, Mg, Ca, Sr, Ba ;
E est un autre métal choisi parmi au moins Na, K, Rb, Cs, Mg, Ca, Sr, Ba ;
x1 est tel que 0 ≤ x1 ≤ 1 ;
x2 est tel que 0 ≤ x2 ≤ 1 ;
avec 0 < x1 + x2 ≤ 1 ;

3. Composé selon l'une quelconque des revendications précédentes, lequel a une structure de type couche infinie, et notamment une forme crystalline de type P4/mmm, I4/mcm, C2/c, ou Pbnm.

4. Procédé de préparation d'un composé selon l'une quelconque des revendications 1 à 3, comprenant une étape de défluoration d'un composé de formule (II) suivante :
AₓNiF₃ (II),
dans laquelle A et x sont tels que définis dans la revendication 1.

5. Procédé selon la revendication 4, dans lequel l'étape de défluoration se fait :
- sous hydrogène, en particulier sous flux d'hydrogène ;
- en présence d'un agent réducteur tels que NaH et/ou CaH₂ ; ou
- par voie électrochimique.

6. Procédé de préparation d'un composé selon l'une quelconque des revendications 1 à 3, comprenant une étape de croissance de couche mince par épitaxie, en particulier sur un substrat de type SrTiO₃, KTaO₃, ou EuScO₃.

7. Matériau actif, notamment d'intercalation, pour électrode négative, en particulier de batterie au fluor, constitué de ou comprenant un composé selon l'une quelconque des revendications 1 à 3.

8. Matériau actif selon la revendication 7, dont le composé de formule (I) forme un couple redox avec un composé de formule (II) suivante :
AₓNiF_{2+y} (II),
dans laquelle A et x sont tels que définis dans la revendication 1 et 0 < y ≤ 1.

9. Matériau actif selon la revendication 8, dont le composé de formule (I) a une structure de type couche infinie, et notamment une forme crystalline de type P4/mmm, I4/mcm, C2/c, ou Pbnm.

10. Batterie, notamment d'intercalation, au fluor, comprenant :
- une électrode négative comprenant ou constituée d'un matériau actif selon l'une quelconque des revendications 7 à 9;
- une électrode positive ;
- un électrolyte, ayant notamment une conductivité en ions fluorure ; laquelle comprend en particulier :
- une couche d'électrode négative comprenant ou constituée d'un matériau actif selon l'une quelconque des revendications 7 à 9 ;
- une couche d'électrode positive ; et
- entre ladite couche d'électrode négative et ladite couche d'électrode négative, à leur contact, une couche d'électrolyte, en particulier solide.

11. Batterie selon la revendication 10, dans laquelle :
- l'électrolyte est de formule suivante :
La_{0,9}Ba_{0,1}F_{2,9} ;
et/ou
- l'électrode positive est constituée de ou comprend un matériau de formule suivante :
La₂NiO_{(4+δ)}Fₓ ;
avec δ variant de -1,5 à 0,25, δ étant par exemple de 1,3 ; et x variant de 1 à 3.
